(19) Europäisches Patentamt

European Patent Office

Office européen des brevets

(11) **EP 1 670 127 A1**

(12) **EUROPEAN PATENT APPLICATION**

(43) Date of publication:
**14.06.2006 Bulletin 2006/24**

(51) Int Cl.:
*H02K 55/04* (2006.01)　　*H02K 19/36* (2006.01)
*H02K 11/00* (2006.01)

(21) Application number: **05255979.6**

(22) Date of filing: **26.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.12.2004 US 904952**

(71) Applicant: **GENERAL ELECTRIC COMPANY Schenectady, NY 12345 (US)**

(72) Inventors:
• **Laskaris, Evangelos Trifon
Niskayuna
New York 12309 (US)**

• **Fogarty, James Michael
Schenectady
New York 12309 (US)**
• **Huang, Xianrui
Clifton Park
New York 12065 (US)**
• **Bray, James William
Schenectady
New York 12309 (US)**

(74) Representative: **Goode, Ian Roy et al
London Patent Operation,
General Electric International Inc.,
15 John Adam Street
London WC2N 6LU (GB)**

(54) **Parallel connected superconducting coils for a synchronous machine**

(57)　　Superconducting rotor coil assembly (34). Coils (102,104) of one pole are connected in parallel to obtain a lower voltage. Each parallel branch (191,192) further comprises a current equalising resistor (132,134). The coils are stacked with heat conductive plates (137) in between and coated by a heat conductive copper coating (138).

# FIG. 5

## Description

The present invention relates generally to a superconductive coil in a synchronous rotating machine. More particularly, the present invention relates to superconducting wire wound into two or more superconducting coils connected in series or parallel for use in a superconducting rotor of a synchronous machine or similar equipment.

Synchronous electrical machines having field windings include, but are not limited to, rotary generators, rotary motors, and linear motors. These machines generally include a stator and rotor that are electromagnetically coupled with each other. The rotor often includes a multi-pole rotor core and one or more field windings mounted on the rotor core. Rotor cores may include a magnetically permeable solid material, such as an iron-core rotor.

With the exception of reluctance machines, an essential feature of a synchronous electrical machine is a rotor that produces a magnetic flux that is fixed in relation to the rotor. In other words, when the rotor spins, the magnetic flux revolves with the rotor. In a class of synchronous electrical machines with field windings, magnetic flux is created by a current passing through of one or more coils arranged to form a magnet. The "magnetic axis" of each coil is aligned with each other such that their magnetic effects are additive. In many cases, the coils are electrically connected with each other in series such that the same current flows through each coil. In other instances, the coils are connected in parallel or series/parallel arrangements. When the coils are connected in parallel, the coils are typically situated on different magnetic poles.

Copper windings are commonly used in the rotors of synchronous electrical machines. However, the electrical resistance of copper windings (although low by conventional measures) is sufficient to contribute to substantial heating of the rotor and thereby diminish the power efficiency of the synchronous electrical machine. Recently, high temperature superconducting (HTS) wire has been developed for use with winding coils on rotors. HTS wire has effectively no resistance and is highly advantageous for use in winding a superconducting (SC) coil.

SC coils must be cooled to a temperature at or below a critical temperature, e.g., 27 K, to achieve and maintain super-conductivity. SC coils have been cooled by liquid helium. After cooling the windings of the SC coil, the hot, used liquid helium is returned as gaseous helium, which requires continuous reliquification for further cooling of the SC coil. However, reliquification poses significant reliability problems and requires significant auxiliary power.

Synchronous electrical machines with windings that comprise an assembly of SC coils are now well known. The field windings of these machines have typically had a single assembly of SC coils on each magnetic pole with each SC coil of the assembly of SC coils connected in series. One arrangement for an electrical generator includes a rotor with a field winding comprising a single SC coil that passes around a structural core, which is typically magnetic. Current flowing in the SC coil generates a magnetic field and magnetic flux passes through the rotor to the stator in the normal manner. That is, magnetic flux from the rotor induces a current in the stator during rotation of the rotor, which forms the output of an electrical generator.

Inductance measures a resistance to a change in current. Inductance of a field winding is proportional to a permeance of the overall magnetic structure and the square of the number of turns. In conventional physics, increasing the number of turns in a coil reduces the current required to generate a given magnetic field. An SC coil requires 10 times the number of turns of a conventional coil to achieve the same magnetic field because each turn of the HTS wire of the coil only carries about a factor of 10 less current compared to a conventional coil (e.g., 100 A in an SC coil compared to 1000 A to 3000 A in a conventional coil). Additionally, the inductance of a coil is proportional to the square of the number of turns of the coil. Thus, an increase in number of turns of the coil by a factor of 10, for example, causes a subsequent increase in overall inductance by a factor of 100.

Starting and stopping of large electrical devices on a power grid cause moment-to-moment changes in the current demand from generators on the power grid. A coil having a large inductance requires a high voltage excitation system in order to control the current in the coil rapidly. Thus, any changes in the field current driven by moment-to-moment changes in power grid conditions require high voltages to drive the changes in current, or transient current. The resulting excitation system required to drive the transient current tends to be very expensive because of the high voltage rating necessary to provide such high voltages.

Thus, a typical SC rotor with an SC coil is likely to have a high effective inductance, thereby requiring a high maximum excitation voltage. Such a high maximum excitation voltage may result in a high cost of the exciter producing this voltage. If a typical SC coil assembly has two or more parallel circuits, it is likely there would be different values of current through each parallel coil operating as a coil assembly.

Accordingly, what is desired is an SC rotor with an SC coil having a lower effective inductance, thus eliminating the requirement of a costly high voltage excitation system to control transient currents. It is further desired for the several parallel coils operating as a coil assembly to conduct essentially the same current.

Exemplary embodiments of the invention include a superconducting coil assembly. The superconducting coil assembly includes a plurality of circuit branches. Each circuit branch of the plurality of circuit branches is electrically connected in parallel to each other. Each circuit branch is disposed at a structural core.

Each circuit branch of the plurality of circuit branches includes a coil wound from a superconducting wire and a means for providing a resistance to the coil. The coil from each circuit branch forms a plurality of coils with respect to the plurality of circuit branches.

Further exemplary embodiments of the invention include a superconducting rotor. The superconducting rotor includes a rotor core having a magnetic core, a shaft extending axially from opposite sides of the rotor core and attached to the rotor core, and a coil assembly disposed at the rotor core. The coil assembly is annular shaped, and disposed in a plane coinciding with an axis of rotation of the rotor core. The coil assembly is situated to form a magnetic north and south pole on the rotor core when a current is applied to the coil assembly. The coil assembly includes a plurality of circuit branches. Each circuit branch of the plurality of circuit branches is electrically connected in parallel to each other. Each circuit branch is disposed at a structural core. Each circuit branch of the plurality of circuit branches includes a coil wound from a superconducting wire and a means for providing a resistance to the coil. The coil from each circuit branch forms a plurality of coils with respect to the plurality of circuit branches.

Another exemplary embodiment of the invention is a synchronous machine which includes a stator, a rotor which is magnetically coupled to the stator, a cooling system, an excitation system, a shaft extending axially from opposite sides of the rotor and attached to the rotor, and a coil assembly. The cooling system is configured to maintain the coil assembly at a temperature between about 20 K to about 80 K. The coil assembly includes a plurality of circuit branches. Each circuit branch of the plurality of circuit branches is electrically connected in parallel to each other. Each circuit branch is disposed at a structural core. Each circuit branch of the plurality of circuit branches includes a coil wound from a superconducting wire and a means for providing a resistance to the coil. The coil from each circuit branch forms a plurality of coils with respect to the plurality of circuit branches.

The above, and other objects, features and advantages of the present invention will become apparent from the following description read in conjunction with the accompanying drawings, in which like reference numerals designate the same elements, and in which:.

Referring now to the drawings wherein like elements are numbered alike in the several FIGURES:

FIG. 1 is a schematic side elevational view of a synchronous electrical machine having a superconducting rotor and a stator;

FIG. 2 is a perspective view of an exemplary embodiment of a superconducting (SC) coil assembly;

FIG. 3 is a cross-section view of an SC rotor with a coil assembly, the coil assembly including two coils electrically connected in parallel;

FIG. 4 is an enlarged view of one side of the coil assembly of FIG. 3 illustrating a plurality of turns for each coil;

FIG. 5 is a circuit diagram of the two coils in the coil assembly of FIG. 3;

FIG. 6 is a cross-section view of a coil assembly having two coils electrically connected in parallel illustrating a conduction coating surrounding the coil assembly and a conduction plate between the coils;

FIG. 7 is a cross-section view of a coil assembly showing three coils electrically connected in parallel illustrating a conduction coating surrounding the coil assembly;

FIG. 8 is a circuit diagram illustrating the coil assembly of FIG 7;

FIG. 9 is a cross-section view of an SC rotor with three coils electrically connected in parallel forming a coil assembly in which each of the coils are spaced apart from one another;

FIG. 10 is a cross-section view of six contiguous coils serially stacked in a coil assembly;

FIG. 11 is a schematic diagram showing an arrangement of balancing resistors disposed at a collector end shaft of the rotor and electrically connected to a respective coil of three coils electrically connected in parallel; and

FIG. 12 is a schematic diagram showing an arrangement of balancing resistors remote from the collector end shaft of the rotor and electrically connected to a respective coil of three coils electrically connected in parallel.

A typical synchronous electrical machine includes a stator and a rotor with a field winding comprising a coil that passes around a magnetic structure. The stator is electromagnetically coupled to the rotor. A superconducting (SC) rotor further includes a means to transmit torque, one or more cooling circuits, thermal insulating systems, and electromagnetic shields.

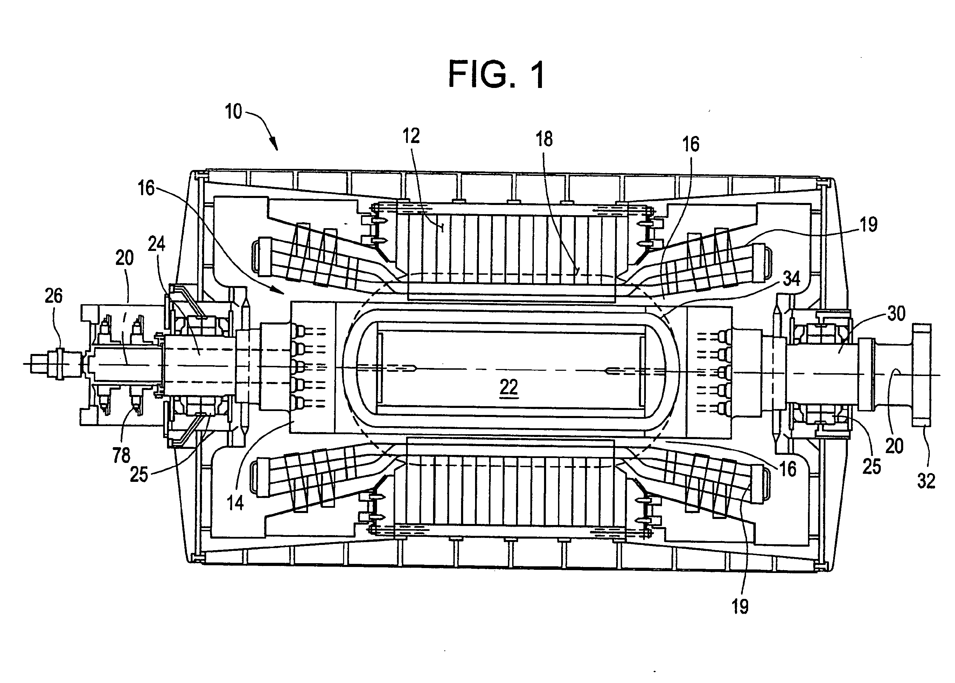

FIG. 1 shows an exemplary synchronous machine 10 having a stator 12 and a rotor 14. Rotor 14 is disposed at a cylindrical rotor air cavity 16 of the stator 12. The rotor 14 has a generally longitudinally extending axis 20 and a generally solid rotor core 22. The rotor core 22 has a high magnetic permeability, and is made of a ferromagnetic material, such as iron. In a low power density superconducting machine, the iron core of the rotor 14 is used to reduce the magnetomotive force (MMF), thus minimizing the amount of HTS wire needed to wind a coil. Rotor 14 supports at least one longitudinally extending, annular shaped, SC coil assembly 34. Although this exemplary embodiment is a synchronous generator, it is envisioned that other exemplary embodiments involving devices utilizing SC coils are possible. Other exemplary embodiments include, for example, a synchronous motor.

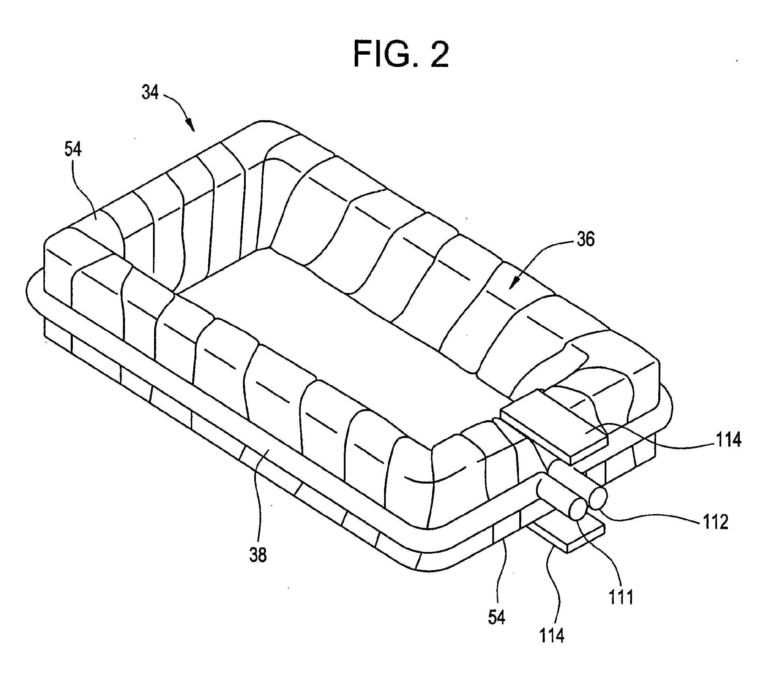

Rotor 14 includes field windings (not shown) that form a plurality of coils 36 (see FIG. 2). When a current flows through the plurality of coils 36, a magnetic field 18 (illustrated by dotted lines) is formed around the rotor 14 that extends radially from the rotor 14 and is fixed relative to the rotor 14. As the rotor rotates, the magnetic field 18 generated by the coil assembly 34 rotates through the stator 12 and creates an electrical current in the windings of the stator coils 19. The electrical current is output by the generator for use downstream.

End shafts attached to rotor core 22 support rotor core 22. Rotor 14 includes a collector end shaft 24 and a drive end shaft 30. Collector end shaft 24 and drive end shaft 30 are each supported by bearings 25. The end shafts 24 and 30 may be coupled to external devices. Collector end shaft 24 includes collector rings 78 that provide an external electrical connection to the plurality of coils 36. The collector end shaft 24 also has a cryogen transfer coupling 26 adapted for connection to a source of cryogenic cooling fluid used to cool the plurality of coils 36 on the rotor 14. Drive end shaft 30 of the rotor 14 may be driven by a power turbine via a power coupling 32. Although two separate end shafts have been described, a single shaft extending through the rotor core 22 is also contemplate.

FIG. 2 shows an exemplary embodiment of an annular shaped SC coil assembly 34. The SC coil assembly 34 includes a plurality of coils generally indicated at 36 and a fluid passage 38 surrounding the plurality of coils 36 for cryogenic cooling of the same. The dimensions of the coils 36 are dependent on the dimensions of the rotor core 22. Generally, the coils 36 encircle the magnetic poles at opposite ends of the rotor core 22, and are parallel to the rotor axis 20. Coils 36 form an electrical current path around the rotor core 22 and between the magnetic poles of the core. The plurality of coils 36 has electrical contacts 114 that electrically connect the plurality of coils 36 to the collector 78.

The fluid passage 38 extends around an outside edge of the plurality of coils 36. The fluid passage 38 provides cryogenic cooling fluid, for example helium, to the plurality of coils 36 and removes heat from the plurality of coils 36. The cooling fluid maintains the plurality of coils 36 at a temperature of about 20 K to about 80 K to promote superconducting conditions. The fluid passage 38 includes an input port 111 and an output port 112 respectively, connected to the cryogen transfer coupling 26. It will be recognized that although a single fluid passage 38 is illustrated, any number is contemplated, and not limited to a single fluid passage 38 as illustrated.

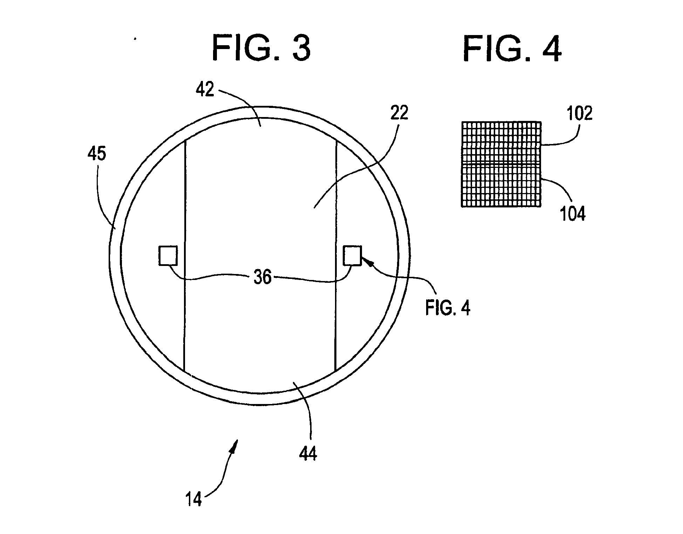

Referring to FIGS. 3 and 4, a cross section view of the rotor 14 in which two coils 102 and 104 have been separately fabricated and then bonded together to form the complete plurality of coils 36 is illustrated. In this exemplary embodiment of the rotor 14, the plurality of coils 36 is wrapped around the rotor core 22 longitudinally in an annular fashion. In other words, the plurality of coils 36 are generally disposed in a plane in which an axis of rotation, corresponding to end shafts 24 and 30, also lies. Disposal of the plurality of coils 36 around the rotor core 22 as described above forms a north pole 42 and south pole 44 on the rotor 14. An electromagnetic shield 45 made of a highly conductive material, aluminum or copper for example, encases the rotor core 22 and the plurality of coils 36. It will be noted that FIG. 4 is an enlarged view of first and second coils 102 and 104 on a right side of rotor core 22 in FIG. 3. It should be noted that while the rotor core 22 displayed in this exemplary embodiment has two poles, it is envisioned that this disclosure is applicable to other exemplary embodiments, which include more than two poles. Additionally, although the rotor core 22 in an exemplary embodiment is made of magnetic material, it should be noted that in alternative embodiments a non-magnetic structure is envisioned.

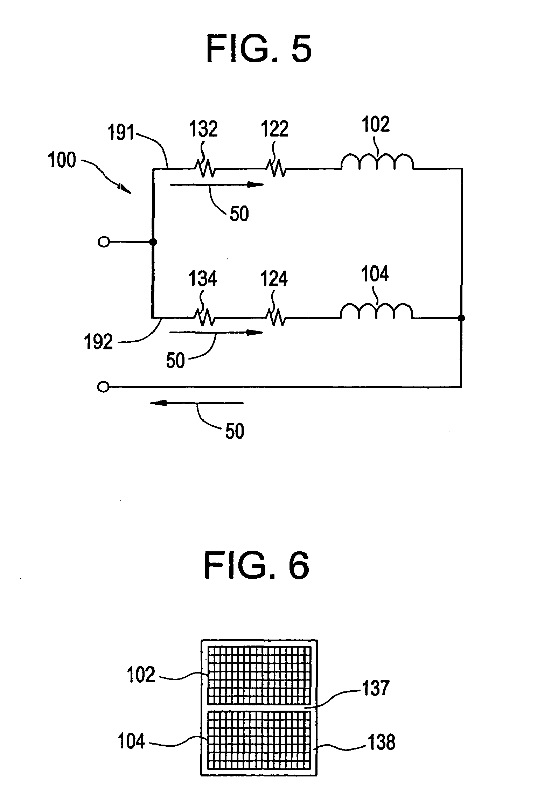

FIG. 5 shows an electrical circuit diagram 100 of the plurality of coils 36 of FIG. 3. The circuit diagram 100 comprises first and second circuit branches 191 and 192 electrically connected in parallel. The first circuit branch 191 includes the first coil 102 having a first coil resistance 122 in series with a first current balancing resistor 132. The second circuit branch 192 includes the second coil 104 having a second coil resistance 124 in series with a second current balancing resistor 134. An arrow 50 indicates a direction of current flow through the circuit.

FIG. 6 shows an alternative exemplary embodiment in which a conduction plate 137 is disposed between first and second coils 102 and 104. The conduction plate 137 enhances heat removal from an unexposed surface of the plurality of coils 36 to maintain the temperature of first and second coils 102 and 104 uniform. Additionally, a conduction coating 138 is disposed on an exposed surface of the plurality of coils 36. The conduction plate 137 and the conduction coating 138 are made of a copper material, however, the use other highly conductive materials is also contemplated.

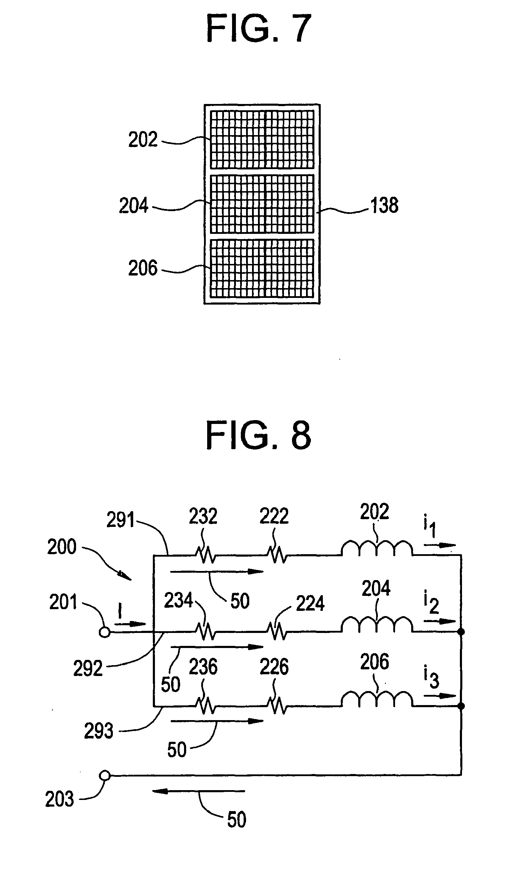

FIG. 7 shows an alternative exemplary embodiment in which first, second, and third coils 202, 204, and 206 respectively, are connected in parallel but assembled into one monolithic assembly of the plurality of coils 36. The conduction coating 138 of this exemplary embodiment is disposed on the exposed surface of the plurality of coils 36.

FIG. 8 shows a circuit diagram 200 for the plurality of coils 36 of FIG. 7. Circuit diagram 200 comprises a first, second and third circuit branch 291, 292, and 293, respectively, electrically connected in parallel. The first circuit branch 291 includes a first coil 202 having a first coil resistance 222 in series with a first current balancing resistor 232. The second circuit branch 292 includes a second coil 204 having a second coil resistance 224 in series with a second current balancing resistor 234. The third circuit branch 293 includes a third coil 206 having a third coil resistance 226 in series with a third current balancing resistor 236. An arrow 50 indicates a direction of current flow through the circuit.

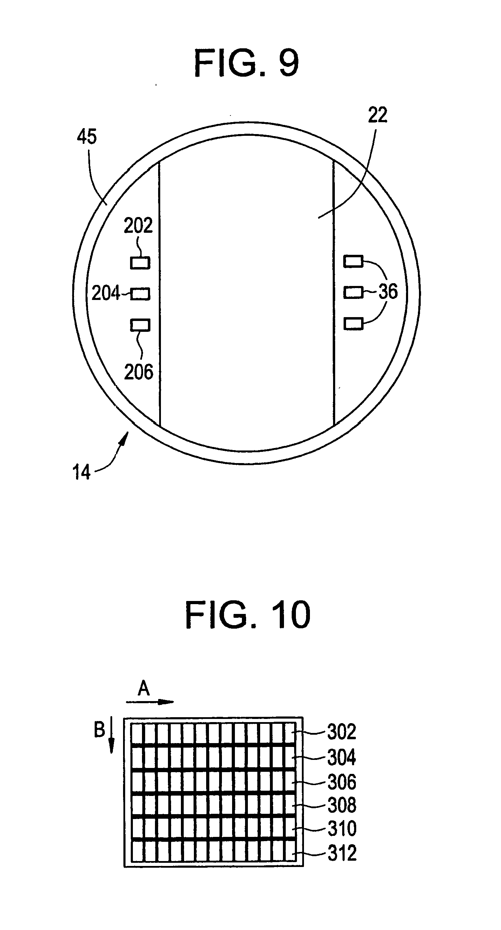

FIG. 9 shows an alternative exemplary embodiment of the rotor 14 in which the plurality of coils 36 is disposed around the rotor core 22 in a different arrangement. The first, second and third coils 202, 204 and 206 are electrically connected in parallel as shown in FIG. 3, but physically spaced apart from each other. In this instance, a different configuration of the fluid passage 38 is used for cooling.

FIG. 10 shows six contiguous coils wound in a "pancake" style. Pancake style refers to an arrangement where, for example, a first coil 302, a second coil 304, a third coil 306, a fourth coil 308, a fifth coil 310 and a sixth coil 312 are disposed one on top of another in a serially stacked manner. Coils 302-312 wound in the pancake style configuration includes winding each coil such that it has many turns of depth in a first direction A, but only one turn of width in a second direction B, which is substantially perpendicular to the first direction A. Thus, each coil is wound such that all turns thereof are coplanar. Each coil is also parallel with each other coil and serially stacked in thermal contact with a contiguous coil such that a maximum surface area of each coil is exposed to the maximum surface area of another contiguous coil. The stack extends in the second direction B. Each coil can easily be formed on winding equipment where an engineer has a choice of connecting the coils in series, in parallel or some combination of series and parallel to form a plurality of coils 36. In exemplary embodiments of the present invention, a parallel or series parallel coil arrangement is selected. When two or three parallel groups are utilized, it would be possible to interleave the coils to more completely assure magnetic symmetry. In an exemplary embodiment, it is possible to connect first, third and fifth coils 302, 306, and 310 in series and second, fourth and sixth coils 304, 308, and 312 in series. Thus, series connected first, third and fifth coils 302, 306, and 310 would be in parallel with series connected second, fourth and sixth coils 304, 308, and 312. In another exemplary embodiment, series connected first and fourth coils 302 and 308 form a first circuit branch, series connected second and fifth coils 304 and 310 form a second circuit branch, and series connected third and sixth coils 306 and 312 form a third circuit branch. First, second, and third circuit branches are electrically connected such that each circuit branch is connected in parallel with each other circuit branch.

Referring again to FIG. 8, there is both a transient current and a direct current (DC) in each coil. DC is needed for steady state torque and real power transfer. The transient current is needed to change a state of the machine as a result of shifts in a load, a power input, a power factor, or a voltage. An inductance of each coil is so large that its impedance at all practical frequencies is orders of magnitude greater than a total resistance corresponding to a total of each coil resistance 222, 224, and 226 and each current balancing resistor 232, 234, and 236. Any changes in excitation voltage due to changes in the state of the machine are applied to each coil connected in parallel and the rate of change of transient current in each coil is equal (within the limits of symmetry of inductances among the coils). DC or slowly varying current is balanced by each current balancing resistor 232, 234, and 236.

Each current balancing resistor 232, 234, and 236 is selected to have a resistance much larger than the corresponding coil resistance 222, 224, and 226 of a respective coil 202, 204, and 206 respectively. Each current balancing resistor 232, 234, and 236 is also selected to ensure a balanced resistance in each parallel circuit branch 291, 292, and 293. It is desirable that the net differences in resistance between each parallel circuit branch 291, 292, and 293 is a maximum of about 1%. Each current balancing resistor 232, 234, and 236 is also chosen to have a resistance small enough to ensure that a significant amount of power is not dissipated in each current balancing resistor 232, 234, and 236. Heat produced by power dissipated in each current balancing resistor 232, 234, and 236 increases the heat load on the cryogenic cooling system as provided by the fluid passage 38.

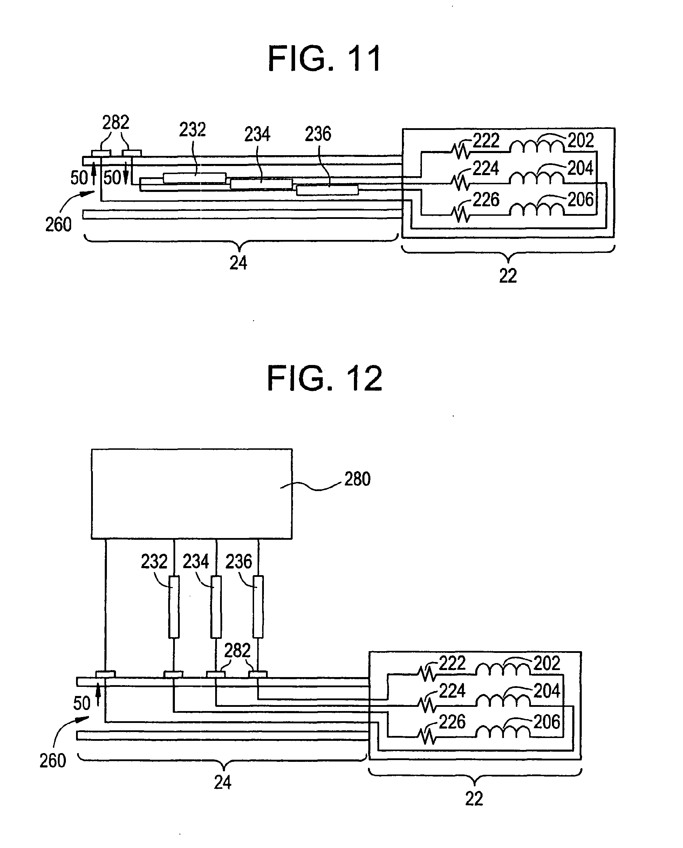

FIG. 11 shows an embodiment in which each current balancing resistor 232, 234, and 236 is disposed within a rotor shaft bore 260 of the collector end shaft 24. The rotor shaft bore 260 comprises a cavity of the collector end shaft 24. The cavity extends through a center portion of the collector end shaft 24 along a rotational axis of the collector end shaft 24. Arrow 50 shows the direction of current flow from an excitation system 280 (see FIG. 12) through field winding terminals 282 disposed on the collector end shaft 24 and into each parallel circuit branch 291, 292, and 293. Disposing each current balancing resistor 232, 234, and 236 within the rotor shaft bore 260 requires heat removal and isolation from the cryogenic cooling system which also passes through the rotor shaft bore 260. Thus, it is also possible to mount the current balancing resistors 232, 234, and 236 apart from the rotor shaft bore 260 as shown in FIG. 12 in accordance with an alternative exemplary embodiment.

FIG.12 shows each current balancing resistor 232, 234, and 236 mounted apart from the collector end shaft 24 and is optionally located with the excitation system 280 in a separate equipment cabinet. The excitation system 280 provides excitation voltage to the coils 202, 204, and 206 through the field winding terminals 282 producing current flow in the direction of arrow 50. It will be recognized that if there are "n" parallel branches, there must be at least "n+1" field winding terminals 282 to provide a path for current in each of the parallel branches.

A comparison of the present invention and a single reference coil containing 3N turns carrying a current "*i*" will illustrate the effects of arranging each circuit branch 291, 292, and 293 in parallel as shown in FIG. 8, for example. Assume that each coil 202, 204, and 206 in FIG. 8 contains N turns and is connected in parallel with the other coils. Thus, if a current I flows into the circuit from an input terminal 201 to an output terminal 203, each current balancing resistor 222, 224, and 226 divides current I into three equal currents $i_1$, $i_2$ and $i_3$, which flow through each corresponding parallel circuit branch 291, 292, and 293. Each coil 202, 204, and 206 is magnetically coupled to a certain degree to each other coil due to current through each coil 202, 204, and 206 creating a flux. The flux in each coil partially links another coil according to Ampere's Law. The total flux linkage of coil 202 is characterized by a component due to the self-inductance $L_{202}$ of coil 202 (flux linkage of coil 202 ($\lambda_{202}$) caused by current in coil 202), a component due to the mutual inductance $M_{204}$ (flux linkage of coil 202 ($\lambda_{202}$) caused by current in coil 204), and a component due to the mutual inductance $M_{206}$ (flux linkage of coil 202 ($\lambda_{202}$) caused by current in coil 206). Thus, the overall flux linkages of each of the coils 202, 204, and 206 is defined by the matrix relationship:

$$\begin{bmatrix} \lambda_{202} \\ \lambda_{204} \\ \lambda_{206} \end{bmatrix} = \begin{bmatrix} L_{202} & M_{204} & M_{206} \\ M_{202} & L_{204} & M_{206} \\ M_{202} & M_{204} & L_{206} \end{bmatrix} \begin{bmatrix} i_1 \\ i_2 \\ i_3 \end{bmatrix}$$

Each current balancing resistor 232, 234, and 236 ensures that $i_1 = i_2 = i_3 = I/3$

The flux linking coil 202 is then

$$\lambda_{202} = \frac{L_{202} + M_{204} + M_{206}}{3} * I$$

Assuming that the coils are coupled magnetically to a high degree because of the common magnetic pole structure, the self and mutual inductances are practically equal e.g., ($L_{202} = M_{204} = M_{206}$). Thus, the apparent coil inductance (L) (ratio of flux linkages to the terminal current) is $L = \lambda_{202}/I = L_{202}$.

Each coil 202, 204, and 206 in the present disclosure has one third less turns than the single reference coil mentioned above. Inductance is proportional to the square of the number of turns. Additionally, an effective inductance of inductances in series is the sum of the inductances in series. For example, if each coil 202, 204, and 206 having inductance L is connected in series, the effective inductance is 3L. However, if each coil 202, 204 and 206 having inductance L is connected in parallel, the effective inductance is $\frac{1}{3}$ L. Thus, each coil of the present disclosure i.e., coil 202 has a self-inductance which is one ninth of the inductance of an arrangement of each coil connected in series.

The transient behavior of a coil structure strongly affects current and voltage ratings of the coil structure's excitation system. Parallel connection of each coil 202, 204, and 206 requires three times the current be supplied at the terminals of the plurality of coils 36 to insure each coil 202, 204, and 206 has the proper current. During a transient event, the voltage applied to the plurality of coils 36 to affect a certain change in current is:

$$e = L \frac{dI}{dt}$$

Thus, since the effective inductance of the plurality of coils 36 is one ninth of the series value and current is three times greater, the overall effect is that a voltage needed to affect the certain change in current is one third of a voltage needed to affect the certain change in a series connected arrangement. The voltage reduction means a lower excitation voltage is required which may impact the rating, construction, and cost of the excitation system 280.

In addition, while the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

**Claims**

1. A superconducting coil assembly (34) comprising:

a plurality of circuit branches, each circuit branch (191, 192, 291, 292, 293) of said plurality of circuit branches is electrically connected in parallel to each other, said each circuit branch (191, 192, 291, 292, 293) is disposed at a structural core, said each circuit branch (191, 192, 291, 292, 293) of said plurality of circuit branches comprises:

a coil (102, 104, 202, 204, 206, 302, 304, 306, 308, 310, 312) wound from a superconducting wire; and
a means for providing a resistance (122, 124, 222, 224, 226) to said coil (102, 104, 202, 204, 206, 302, 304, 306, 308, 310, 312),
wherein said coil (102, 104, 202, 204, 206, 302, 304, 306, 308, 310, 312) from said each circuit branch (191, 192, 291, 292, 293) forms a plurality of coils (36) with respect to said plurality of circuit branches.

2. The superconducting coil assembly (34) of claim 1, wherein said core is disposed at a rotor of a synchronous machine (10), and said core is a magnetic core.

3. The superconducting coil assembly (34) of claim 1, wherein said means for providing said resistance (122, 124, 222, 224, 226) has a resistance (122, 124, 222, 224, 226) larger than a resistance (122, 124, 222, 224, 226) of said coil (102, 104, 202, 204, 206, 302, 304, 306, 308, 310, 312).

4. The superconducting coil assembly (34) of claim 1, wherein said means for providing said resistance (122, 124, 222, 224, 226) comprises a current balancing resistor (132, 134, 232, 234, 236) selected to ensure a net current difference between said each circuit branch (191, 192, 291, 292, 293) is less than about 1%.

5. The superconducting coil assembly (34) of claim 4, wherein said each circuit branch (191, 192, 291, 292, 293) further comprises at least one additional coil (102, 104, 202, 204, 206, 302, 304, 306, 308, 310, 312) connected in series with said current balancing resistor (132, 134, 232, 234, 236).

6. The superconducting coil assembly (34) of claim 1, wherein said plurality of coils (36) is maintained at a temperature between about 20 K to about 80 K by a cooling system.

7. The superconducting coil assembly (34) of claim 1, wherein each said coil (102, 104, 202, 204, 206, 302, 304, 306, 308, 310, 312) of said plurality of coils (36) is disposed serially stacked with each other.

8. The superconducting coil assembly (34) of claim 7, wherein a thermal conduction coating (138) is disposed on an exposed surface of said plurality of coils (36).

9. The superconducting coil assembly (34) of claim 8, wherein a thermal conduction plate (137) is disposed between each said coil (102, 104, 202, 204, 206, 302, 304, 306, 308, 310, 312) to enhance heat removal from said plurality of coils (36).

10. The superconducting coil assembly (34) of claim 8, wherein said cooling system is in thermal contact with said thermal conduction coating (138) and said thermal conduction plate (137).

# FIG. 1

EP 1 670 127 A1

# FIG. 2

EP 1 670 127 A1

# FIG. 3

# FIG. 4

# FIG. 5

# FIG. 6

# FIG. 7

# FIG. 8

# FIG. 9

# FIG. 10

# FIG. 11

# FIG. 12

**European Patent Office**

## EUROPEAN SEARCH REPORT

Application Number

EP 05 25 5979

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 126 798 A (CARR, JR. ET AL) 21 November 1978 (1978-11-21) * column 2, line 65 - column 3, line 5; figures 5-7 * * column 4, lines 12-15 * * column 4, lines 51-55 * | 1,3-5 | H02K55/04 H02K19/36 H02K11/00 |
| Y | * column 6, lines 7-23 * ----- | 2,6-10 | |
| X | US 4 146 804 A (CARR, JR. ET AL) 27 March 1979 (1979-03-27) * column 5, line 42 - column 9, line 60; figures 5,6,8-10 * ----- | 1,3-5 | |
| A | US 6 141 234 A (KNOBLE ET AL) 31 October 2000 (2000-10-31) * column 5, line 5 - line 17; figure 1 * ----- | 4 | |
| Y | US 4 277 705 A (RIOS ET AL) 7 July 1981 (1981-07-07) * column 3, lines 29-33; figures 2,7 * * column 4, lines 42-68 * * column 5, lines 1,2 * * column 5, lines 14-16 * ----- | 2,7-10 | TECHNICAL FIELDS SEARCHED (IPC) H02K |
| Y | US 2004/012288 A1 (STEINMEYER FLORIAN) 22 January 2004 (2004-01-22) | 6 | |
| A | * paragraphs [0002], [0005], [0013], [0017]; figure 1 * ----- | 7 | |

The present search report has been drawn up for all claims

| Place of search | Date of completion of the search | Examiner |
|---|---|---|
| Munich | 17 January 2006 | Strasser, T |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 05 25 5979

This annex lists the patent family members relating to the patent documents cited in  the above-mentioned European search report.
The members are as contained in the European Patent Office EDP file on
The European Patent Office is in no way liable for these particulars which are merely  given for the purpose of information.

17-01-2006

| Patent document cited in search report | | Publication date | Patent family member(s) | | Publication date |
|---|---|---|---|---|---|
| US 4126798 | A | 21-11-1978 | US | T945002 I4 | 06-04-1976 |
| US 4146804 | A | 27-03-1979 | US | T945003 I4 | 06-04-1976 |
| US 6141234 | A | 31-10-2000 | NONE | | |
| US 4277705 | A | 07-07-1981 | NONE | | |
| US 2004012288 | A1 | 22-01-2004 | CA | 2436532 A1 | 18-04-2002 |
| | | | CN | 1470096 A | 21-01-2004 |
| | | | WO | 0231949 A1 | 18-04-2002 |
| | | | DE | 10050371 A1 | 02-05-2002 |
| | | | EP | 1325544 A1 | 09-07-2003 |
| | | | JP | 2004511997 T | 15-04-2004 |
| | | | NO | 20031663 A | 10-04-2003 |

For more details about this annex : see Official Journal of the European Patent Office, No. 12/82